# EUROPEAN PATENT APPLICATION

(11) **EP 2 843 603 A1**
(43) Date of publication of application: **04.03.2015**
(21) Application number: 13188482.7
(22) Date of filing: 14.10.2013
(51) Int. Cl.: G06Q 20/02, G06Q 20/32, G06Q 20/40

(54) **Payment terminal, payment system, payment method, and payment terminal program**

(30) Priority: 25.08.2013 JP 2013174046
(71) Applicant: Optim Corporation, Saga 849-0916 (JP)
(72) Inventor: Sugaya, Shunji, Tokyo 108-0014 (JP)
(74) Representative: Plougmann & Vingtoft A/S

(57) **Abstract**

A payment terminal 150 receives a call from a communication terminal 10 having a communication function, and extracts payment information from a payment information database based on a caller number. By using the payment information that is stored in association with the call number, the payment terminal 150 can perform a payment on behalf of the communication terminal 10, or the communication terminal 10 can perform a payment on behalf of the payment terminal 150.

## Description

### CROSS-REFERENCE TO RELATED APPLICATION

The present application claims priority to and the benefit of Japanese Patent Application No. 2013-174046 filed on August 25, 2013, the entire contents of which are incorporated herein by reference.

### BACKGROUND

### (a) Field

The present invention generally relates to a payment terminal, a payment system, a payment method, and a payment terminal program for performing an authentication by a caller number of an incoming call.

### (b) Description of the Related Art

In recent years, various services have been provided to users by connecting mobile terminals connected to a public network to the Web server or the like. In particular, smart phones (i.e., high-performance mobile phones) have allowed the mobile terminals to provide advanced services that have been conventionally performed by personal computers.

Further, by diffusion of information terminals and development of security technologies, an online payment is widely used in the distance selling over the public network, so-called E-commerce. Because the online payment mainly uses credit card information or account information of the electronic money, thereby making the payment of the price for the goods or services through the public network.

However, when the available payment means is not compatible with the terminal in the online payment or a connection is unstable, it can be impossible to perform the online payment by the information terminal of the consumer.

Therefore, an online payment system and a payment substituting server capable of performing various payment processes on behalf of the user have been proposed.

Japanese Patent Application Publication No. 2001-283130 discloses a method for performing the payment between the user and the payment substituting server. In this method, each server provider is provided with various payment means, and the payment is substituted by the payment means corresponding to the server provider being the purchase destination of the user instead of the user by the payment substituting server. The payment of the price to be made by the payment substituting server is performed between the user and the payment substituting server by the payment means preliminarily set between the user and the payment substituting server.

In this method, however, when the user terminal cannot execute any payment means with the payment substituting server by regulations or disconnection of the communication, there is a problem that the payment cannot be performed.

### SUMMARY

The inventor is motivated by an idea that a payment terminal can perform the payment on behalf of a communication terminal or the communication terminal can perform the payment on behalf of the payment terminal by using payment information that is stored in association with a caller number when the communication terminal having a call function places a call to the payment terminal and the payment terminal performs an authentication using the caller number.

An aspect of the present invention is to provide a payment system, a payment terminal, a payment method, and a payment terminal program for allowing the payment terminal to perform the payment on behalf of the communication terminal or allowing the communication terminal to perform the payment on behalf of the payment terminal by using payment information that is stored in association with the caller number by receiving a call from the communication terminal having the call function and extracting the payment information from a payment information database based on the caller number.

A first aspect of the present invention provides a payment terminal including a storage unit having a payment information database to which a caller number and payment information are stored in association with each other, and being communicatively connected to a communication terminal having at least one communication function. The payment terminal includes a communication unit configured to connect a call received from the communication terminal, a caller number acquisition module configured to acquire a caller number from the communication terminal corresponding to the received call, and a payment information extraction module configured to extract from the payment information database payment information that is stored in association with the acquired call number.

According to the first aspect of the present invention, a payment terminal including a storage unit having a payment information database to which a caller number and payment information are stored in association with each other and being communicatively connected to a communication terminal having at least one communication function can connect a call received from the communication terminal, acquire a caller number from the communication terminal corresponding to the received call, and extract from the payment information database payment information that is stored in association with the acquired call number.

The first aspect of the present invention relate to the payment terminal, but can be applicable to a payment method and a payment terminal program in the same manner.

A second aspect of the present invention provides the payment terminal according to the first aspect, further including a billing information receiving module configured to receive billing information about a payment from the communication terminal, and a payment execution module configured to pay a bill about the received billing information by using extracted payment information.

According to the second aspect of the present invention, the payment terminal according to the first aspect can receive billing information about a payment from the communication terminal, and pays a bill about the received billing information by using extracted payment information.

A third aspect of the present invention provides the payment terminal according to the first aspect or the second aspect, further including a payment information use permission module configured to transmit the extracted payment information to the communication terminal to allow the communication terminal to execute a payment by using the payment information.

According to the third aspect of the present invention, the payment terminal according to the first aspect or the second aspect can transmit the extracted payment information to the communication terminal to allow the communication terminal to execute a payment by using the payment information.

A fourth aspect of the present invention provides a payment system in which a communication terminal having a communication function is communicatively connected to a payment terminal including a storage unit having a payment information database to which a caller number and payment information are stored in association with each other. The communication terminal includes a calling module configured to place a call to the payment terminal, a caller number transmission module configured to transmit a caller number of the communication terminal to the payment terminal while placing the call or performing the call, and a billing information transmission module configured to transmit billing information to the payment terminal. The payment terminal includes a communication unit configured to connect the call received from the communication terminal, a caller number acquisition module configured to acquire a caller number from the communication terminal corresponding to the received call, a payment information extraction module configured to extract from the payment information database payment information that is stored in association with the acquired call number, a billing information receiving module configured to receive billing information about a payment from the communication terminal, and a payment execution module configured to pay a bill about the received billing information by using extracted payment information.

According to the fourth aspect of the present invention, in a payment system in which a communication terminal having a communication function is communicatively connected to a payment terminal including a storage unit having a payment information database to which a caller number and payment information are stored in association with each other, the communication terminal can place a call to the payment terminal, transmits a caller number of the communication terminal to the payment terminal while placing the call or performing the call, and transmit billing information to the payment terminal. Further, the payment terminal can connect the call received from the communication terminal, acquire a caller number from the communication terminal corresponding to the received call, extract from the payment information database payment information that is stored in association with the acquired call number, receive billing information about a payment from the communication terminal, and pay a bill about the received billing information by using extracted payment information.

A fifth aspect of the present invention provides a payment system in which a communication terminal having a communication function is communicatively connected to a payment terminal including a storage unit having a payment information database to which a caller number and payment information are stored in association with each other. The communication terminal includes a calling module configured to place a call to the payment terminal, a caller number transmission module configured to transmit a caller number of the communication terminal to the payment terminal while placing the call or performing the call, a payment information receiving module configured to receive payment information from the payment terminal, and a payment execution module configured to execute a payment by using the received payment information. The payment terminal includes a communication unit configured to connect the call received from the communication terminal, a caller number acquisition module configured to acquire a caller number from the communication terminal corresponding to the received call, a payment information extraction module configured to extract from the payment information database payment information that is stored in association with the acquired call number, and a payment information use permission module configured to transmit the extracted payment information to the communication terminal to allow the communication terminal to execute the payment by using the payment information.

According to the fifth aspect of the present invention, in a payment system in which a communication terminal having a communication function is communicatively connected to a payment terminal including a storage unit having a payment information database to which a caller number and payment information are stored in association with each other. The communication terminal can place a call to the payment terminal, transmit a caller number of the communication terminal to the payment terminal while placing the call or performing the call, receive payment information from the payment terminal, and execute a payment by using the received payment information. Further, the payment terminal can connect the call received from the communication terminal, acquire a caller number from the communication terminal corresponding to the received call, extract from the payment information database payment information that is stored in association with the acquired call number, and transmit the extracted payment information to the communication terminal to allow the communication terminal to execute the payment by using the payment information.

A sixth aspect of the present invention provides a payment method executed by a payment terminal including a storage unit having a payment information database to which a caller number and payment information are stored in association with each other and being communicatively connected to a communication terminal having at least one communication function. The payment method includes connecting a call received from the communication terminal, acquiring a caller number of the communication terminal corresponding to the received call, and extracting from the payment information database payment information that is stored in association with the acquired call number.

A seventh aspect of the present invention provides a program for executing a payment method in a payment terminal including a storage unit having a payment information database to which a caller number and payment information are stored in association with each other and being communicatively connected to a communication terminal having at least one communication function. The method includes connecting a call received from the communication terminal, acquiring a caller number of the communication terminal corresponding to the received call, and extracting from the payment information database payment information that is stored in association with the acquired call number.

According to the present invention, by the incoming call from a communication terminal having a call function, and extracts the payment information from the payment information database by the caller number, and payment information stored in association with the caller ID payment system that allows using, payment terminal performs payment in place of the communication terminal or the communication terminal performs payment in place of the payment terminal, the payment terminal, payment method, and to provide a payment terminal program it is possible to.

### BRIEF DESCRIPTION OF THE DRAWINGS

FIG. 1 is a schematic diagram showing a payment system 1 according to an embodiment of the present invention.

FIG. 2 is a schematic diagram showing a payment system 2 according to an embodiment of the present invention.

FIG. 3 is a diagram showing a configuration of a payment system 1 or a payment system 2.

FIG. 4 is a diagram showing a relationship of function blocks and respective functions in a communication terminal 10, a payment terminal 150, and a payment server 200.

FIG. 5 is a flowchart of a payment substituting process executed by a communication terminal 10, a payment terminal 150, and a payment server 200.

FIG. 6 is a flowchart of a payment information use permission process executed by a communication terminal 10, a payment terminal 150, and a payment server 200.

FIG. 7 shows an example of a screen of a payment terminal 150 executing a payment substituting process.

FIG. 8 is an example of a screen of a payment terminal 150 executing a payment information use permission process.

FIG. 9 shows an example of a payment information table of a payment information database 160.

FIG. 10 is an example of a payment information use permission table of a payment information database 160.

### DETAILED DESCRIPTION

In the following detailed description, only certain embodiments of the present invention have been shown and described, simply by way of illustration. As those skilled in the art would realize, the described embodiments may be modified in various different ways, all without departing from the spirit or scope of the present invention. Accordingly, the drawings and description are to be regarded as illustrative in nature and not restrictive. Like reference numerals designate like elements throughout the specification.

Overview of Payment system

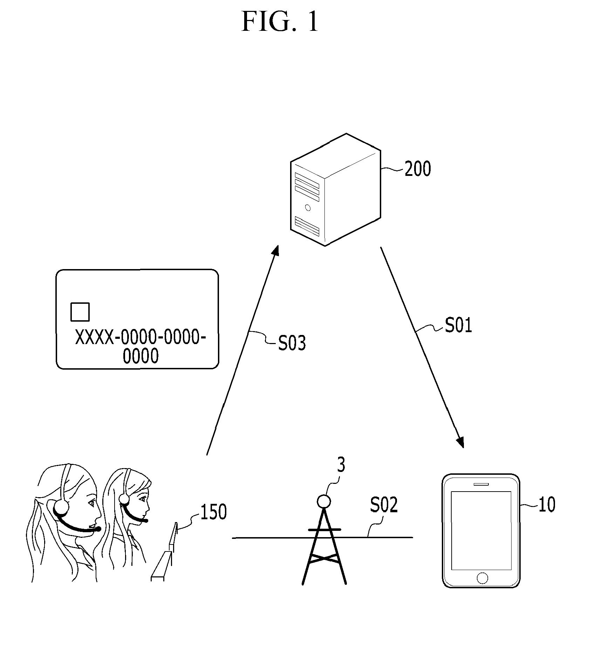

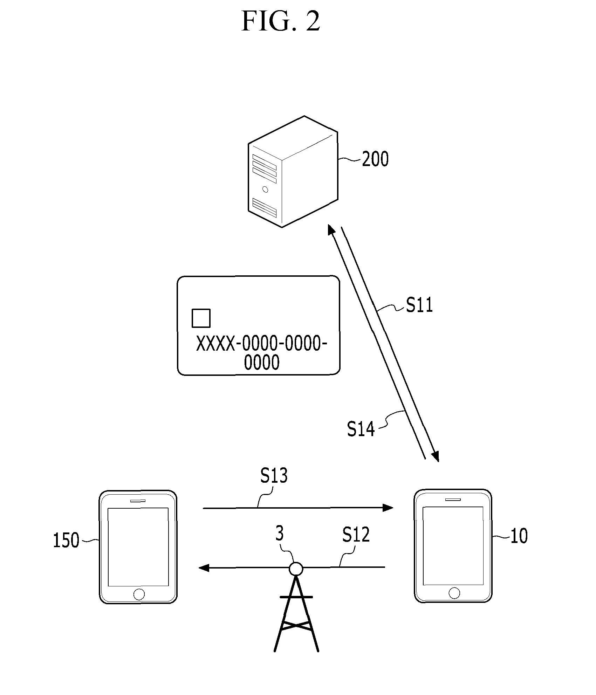

FIG. 1 is a diagram for showing an overview of a payment system 1 according to an embodiment of the present invention, and FIG. 2 is a diagram for showing an overview of a payment system 2 according to an embodiment of the present invention. Overviews of the payment system 1 and the payment system 2 are described with reference to FIG. 1 and FIG. 2.

A payment system 1 includes a communication terminal 10, a payment terminal 150, and a payment server 200. It is assumed in the payment system 1 that the communication terminal 10 cannot communicate with the payment server 200 by a connection failure with a public network 5 or access restriction by a firewall.

First, the payment server 200 transmits billing information to the communication terminal 10 (S01). The billing information may not be transmitted via the public network 5. As an example, an invoice with bar code that can be settled online by the communication terminal 10 may be sent by mail.

Next, the communication terminal 10, for using the payment terminal 150, sends a call to the payment terminal 150 by using a telephone network 3 (S02). In this case, the call may be sent via not only the telephone network 3 but also the public network 5 or a local network.

The payment terminal 150 which has received the call connects a phone call and obtains a caller number, i.e., a caller ID, from the communication terminal 10. In the case of using the telephone network 3, the caller number is a telephone number of the communication terminal 10. In the case of using the public network 5, the caller number may be an identifier for specifying a user such as an account name in a specific application or web service, or may not include only numerals.

After acquiring the caller number, the payment terminal 150 extracts payment information stored in association with the acquired caller number from a payment information database 160. In the present embodiment, the payment information may be payment information of an owner of the communication terminal 10, which has been registered in the payment terminal 150 in advance.

Next, the payment terminal 150 performs the payment process for the payment server 200 by using the extracted payment information (S03). In this case, the payment terminal 150 receives the billing information from the communication terminal 10 if necessary. In this case, the payment terminal 150 may receive the billing information via the public network 5. Alternatively, the billing information may be transmitted by inserting the billing number as a number key or by a voice call.

While the payment terminal 150 has been depicted as a call center in FIG 1, the owner of the communication terminal 10 or other person may own the payment terminal 150. As described above, the overview of the payment system 1 is provided.

Similarly, a payment system 2 is described with reference to FIG. 2. The payment system 2 includes a communication terminal 10, a payment terminal 150, and a payment server 200, in the same manner as the payment system 1. It is assumed in the payment system 2 that the communication terminal 10 is communicatively connected to the payment server 200 and payment information necessary for a payment is not available.

First, similarly to the payment system 1, billing information is transmitted to the communication terminal 10 from the payment server 200 (S11). Subsequently, the communication terminal 10 sends a call to the payment terminal 150 via the telephone network 3 (S12). Further, the payment terminal 150 acquires a calling number and extracts payment information, similarly to the payment system 1.

Next, the payment terminal 150 transmits the extracted payment information to the communication terminal 10 (S13) such that the payment information can be available by the communication terminal 10.

After receiving the payment information, the communication terminal 10 performs a payment process for the payment server 200 by using the payment information (S14). An owner of the communication terminal 10 may be different from a holder of the payment information. In this case, the payment information may be stored in association with a number of a party that gives permission for using the payment information.

As described above, the overview of the payment system 2 is provided. The payment information may be a credit card number, or information necessary for the payment such as an account of the electronic money or a password for transfer execution permission of an online bank.

System Configuration of Payment system

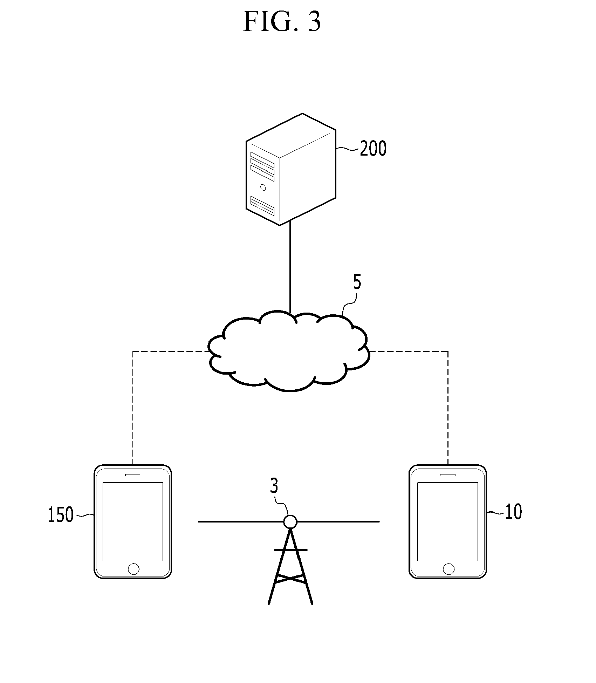

FIG. 3 is a diagram showing a configuration of a payment system 1 or a payment system 2. In the payment system 1 or payment system 2, a communication terminal 10 and a payment terminal 150 are connected to make a call by a telephone network 3. Further, a payment server 200, the payment terminal 150, and the communication terminal 10 are connected to communicate with each other via a public network 5. However, any one of the payment terminal 150 and the communication terminal 10 cannot communicate with the payment server 200 according to the configuration of the payment system.

The payment terminal 150 may be a typical information terminal including a storage unit and a communication unit, or may be an information terminal having a function to be described below. For example, the payment terminal 150 may be a portable terminal such as a cellular phone, a smartphone, a netbook terminal, a slate terminal, an electronic book reader, an electronic dictionary terminal, a portable music player, and a portable content recording and playback player, or may be a stationary terminal such as a personal computer.

The communication terminal 10 may be a typical terminal having a call function. As an example, the communication terminal 10 may be a cellular phone or a smartphone. However, the communication terminal 10 may be not necessarily a home information appliance, but it is sufficient that the communication terminal 10 has the call function like the household telephone.

The payment server 200 is a typical server that provides an online payment service.

Description of Each Function

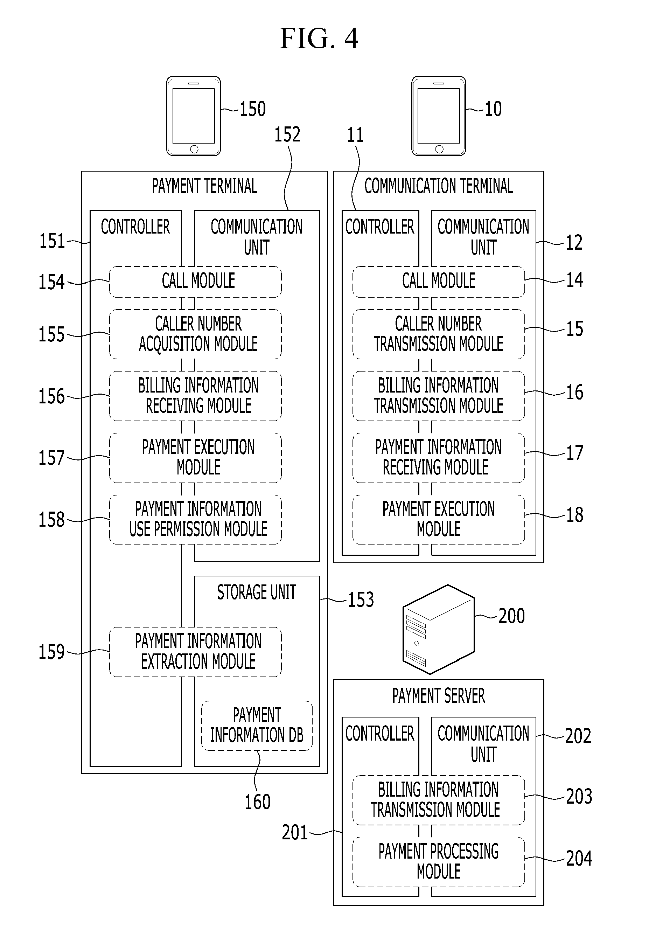

FIG. 4 is a diagram showing a relationship of function blocks and respective functions in a communication terminal 10, a payment terminal 150, and a payment server 200.

The communication terminal 10 includes a central processing unit (CPU), a random access memory (RAM), a read only memory (ROM) and the like as a controller 11, and includes, for example, a WiFi (wireless fidelity) enabled device based on IEEE 8082.11 or a wireless device based on IMT-2000 standard of 3G mobile communication system and the like as a communication unit 12.

In the communication terminal 10, the controller 11 reads a predetermined program, thereby realizing a calling module 14, a caller number transmission module 15, a billing information transmission module 16, a payment information receiving module 17, and a payment execution module 18, with cooperating with the communication unit 12.

Similarly, the payment terminal 150 includes a CPU, a RAM, a ROM and the like as a controller 151, and includes, for example, a WiFi enabled device based on IEEE802.11 (or a wired device) and the like as the communication unit 152. In addition, the payment terminal 150 includes, as a storage unit 153, a data storage unit according to a hard disk or a semiconductor memory. The storage unit 153 stores a payment information database 160.

In the payment terminal 150, the controller 151 reads a predetermined program, thereby realizing a call module 154, a caller number acquisition module 155, a billing information receiving module 156, a payment execution module 157, a payment information use permission module 158, with cooperating with the communication unit 12. Further, in the payment terminal 150, the controller 151 reads a predetermined program, thereby realizing a payment information extraction module 159 with cooperating with the storage unit 153.

Similarly, the payment server 200 includes a CPU, a RAM, a ROM and the like as a controller 201, and includes, for example, a WiFi enabled device based on IEEE802.11 (or a wired device) as a communication unit 202.

In the payment server 200, the controller 201 reads a predetermined program, thereby realizing a billing information transmission module 203 and a payment processing module 204, with cooperating with the communication unit 202.

Payment substituting process

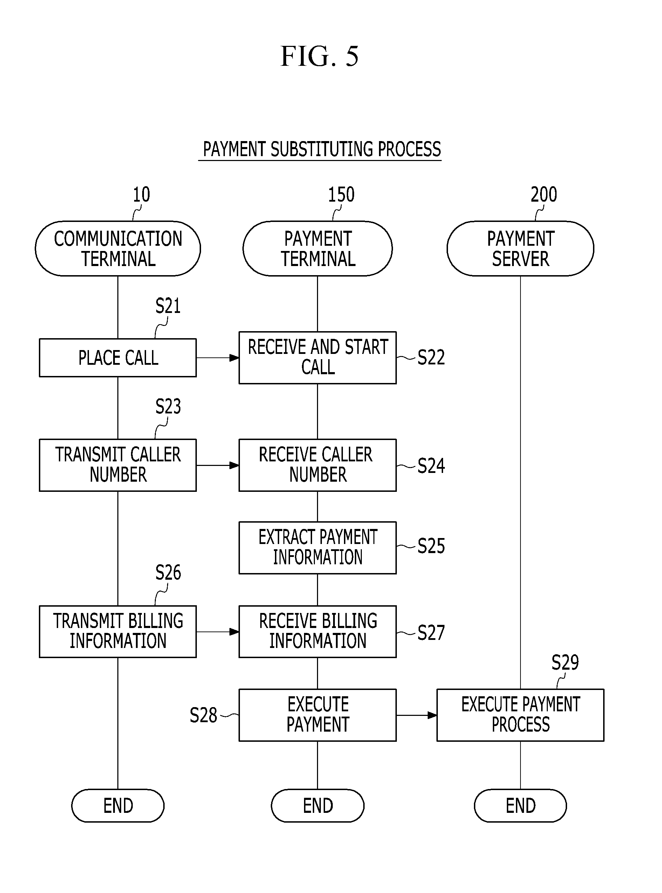

FIG. 5 is a flowchart of a payment substituting process executed by a communication terminal 10, a payment terminal 150, and a payment server 200. Processes executed by the modules of each device described above are described in conjunction with the present process.

First, the transmission module 14 of the communication terminal 10 places a call to the payment terminal 150 (S21). The call module 154 of the payment terminal 150 receives the call, and connects a phone call (S22). Usually, the phone call may be performed by using a telephone network 3. Alternatively, the phone call may be performed by using a public network 5 like using an IP phone.

Then, the caller number transmission module 15 of the communication terminal 10 transmits a caller number to the payment terminal 150 (S23). The caller number acquisition module 155 of the payment terminal 150 receives the caller number (S24). When the telephone network 3 is used, the caller number is a telephone number of the communication terminal 10. Alternatively, when the call is placed by a specific application or a web service, the caller number may be an identifier for specifying a user such as an account name of a call service, or may not include only numerals.

Next, the payment information extraction module 159 of the payment terminal 150 extracts payment information stored in association with the received caller number from a payment information table of the payment information database 160 (S25).

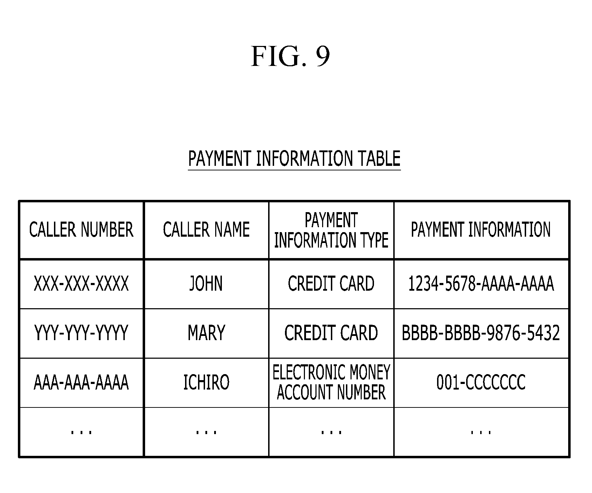

FIG. 9 shows an example of the payment information table of the payment information database 160. In the payment information table, a caller number, a caller name, a payment information type, and payment information are stored in association with each other. The communication terminal of the caller is authenticated in the payment terminal 150 by the caller number such that the caller can perform the payment by using the payment terminal 150. When one caller number is associated with a plurality of payment informations, the payment terminal 150 or the communication terminal 10 may select one payment information.

Next, the billing information transmission module 16 of the communication terminal 10 transmits billing information to the payment terminal 150 (S26). Then, the billing information receiving module 156 of the payment terminal 150 receives the billing information (S27). Here, the billing information may be one that is transmitted to the communication terminal 10 by billing information transmission module 203 of the payment server 200, or may be one that is sent by other means including the mailing.

At this time, the billing information which the payment terminal 150 receives from the communication terminal 10 may be a reference number such as a billing number, and a detailed billing content may be obtained by querying the payment server 200. The billing information may be transmitted via a public network 5, or may be transmitted by inserting the billing number as a number key or by a voice call.

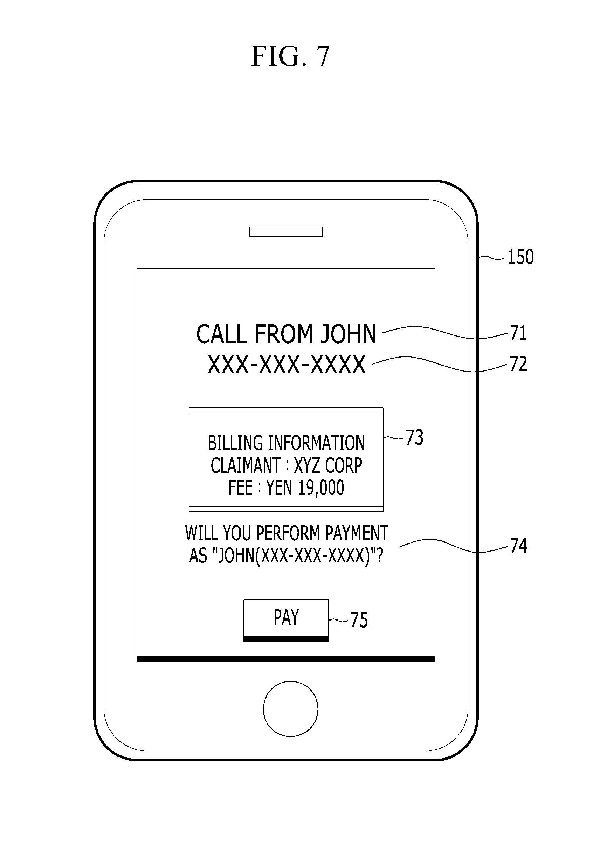

FIG. 7 shows an example of a screen of the payment terminal 150 executing the payment substituting process. A name 71 of the other party in the call with the communication terminal 10 and the caller number 72 are displayed on the screen. Further, the billing information 73 that is received is shown on the screen. Furthermore, a notification 74 that the payment is performed by using the payment information extracted based on the caller number is displayed on the screen. In this example, the holder of the payment information is the owner of the communication terminal 10. Pressing the payment button 75 initiates the execution of the payment for payment server 200.

The payment execution module 157 of the payment terminal 150 executes the payment for the payment server 200 by using the extracted payment information (S28). The payment processing module 204 of the payment server 200 performs the payment process in response to the payment execution (S29). This process is the same as a general online payment process.

As described above, the payment substituting process is executed.

Payment information Use Permission Process

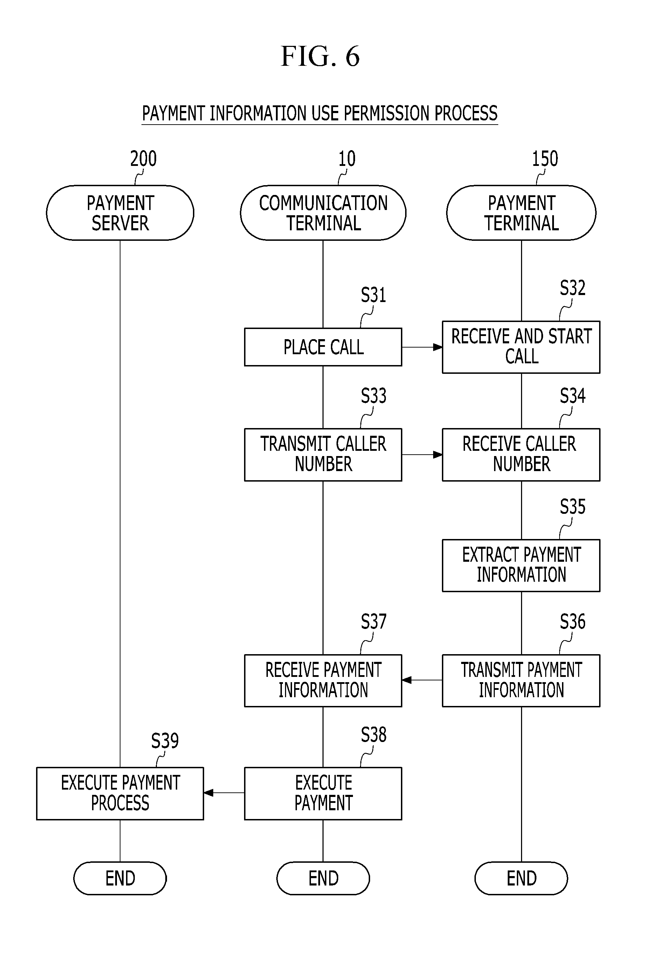

FIG. 6 is a flowchart of a payment information use permission process executed by a communication terminal 10, a payment terminal 150, and a payment server 200. Processes executed by the modules of each device described above are described in conjunction with the present process.

Some steps of the payment information use permission process are common with the payment substituting process. Therefore, the common steps are described by omitting a detailed description.

First, the calling module 14 of the communication terminal 10 places a call to the payment terminal 150 (S31), and the call module 154 receives the call and connects a phone call (S32). Subsequently, the caller number transmission module 15 of the communication terminal 10 transmits a caller number of the communication terminal 10 (S33), and the caller number acquisition module 155 of the payment terminal 150 receives the caller number (S34).

Next, the payment information extraction module 159 of the payment terminal 150 extracts payment information stored in association with the acquired caller number from a payment information use permission table of the payment information database 160 (S35).

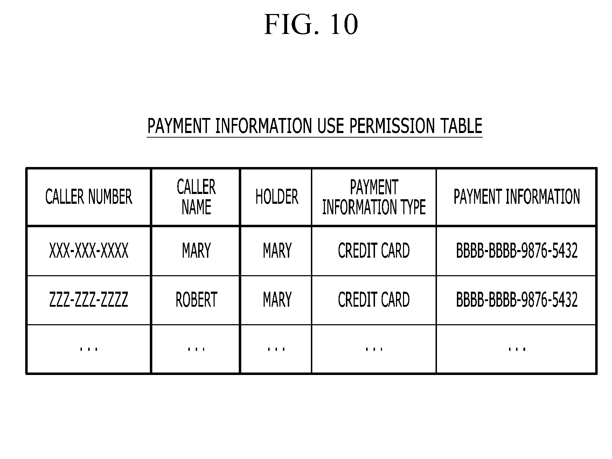

FIG. 10 is an example of the payment information use permission table of the payment information database 160. In the payment information use permission table, a caller number, a caller name, a holder of payment information, a payment information type, and payment information are stored in association with each other. When the caller names are input to the payment information table along with a column of holders, the payment information table has the same structure to the payment information use permission table such that the two tables cannot be separated.

According to the present embodiment, the holder is different from the caller user name in the payment information use permission table. That is, when the communication terminal of the caller is authenticated to the payment terminal 150 by the caller number, the payment information of the holder that is different from the caller can be used. It is noted that the communication terminal 10 may merely relay a communication of the payment terminal 150 and the subject of the payment process may be not the caller but the holder of the payment terminal.

The payment information use permission module 158 of the payment terminal 150 transmits the extracted payment information to the communication terminal 10 (S36). The payment information receiving module 17 of the communication terminal 10 receives the payment information (S37). In this case, the payment information use permission module 158 transmits every information required for the payment to the communication terminal 10, thereby allowing the communication terminal 10 to perform the payment by using the payment information.

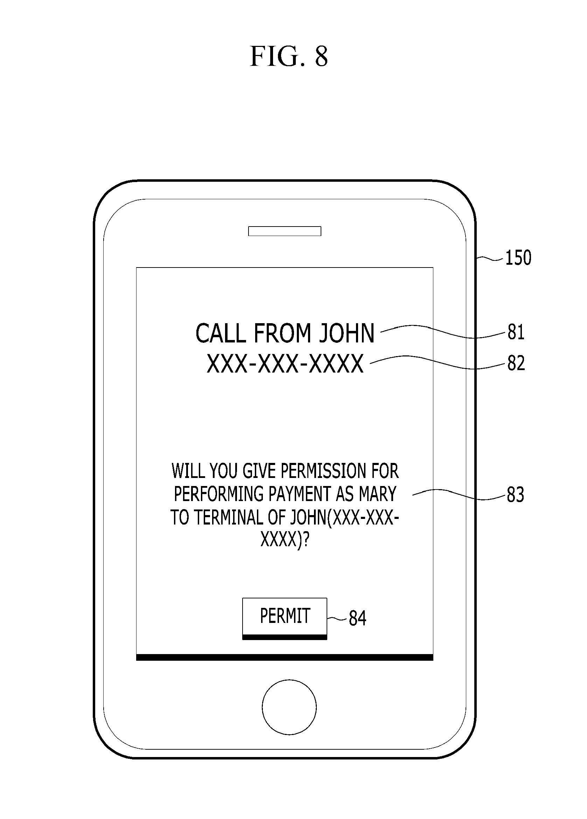

FIG. 8 is an example of a screen of the payment terminal 150 executing the payment information use permission process. A name 81 of the other party in the call with the communication terminal 10 and the caller number 82 are displayed on the screen. Further, a holder name 83 of the payment information that is stored in association with the caller number is displayed. In this example, it is questioned whether to give a permission for using the payment information of Mary who is different from the owner of the communication terminal 10 in the communication terminal 10, i.e., John's terminal that is authenticated by the phone number. When a permission button 84 is pressed, the payment information is transmitted to the communication terminal 10 such that the permission for using the payment information is given.

Finally, the payment execution module 18 of the communication terminal 10 executes the payment by using the received payment information received (S38). The payment server 200 performs the payment process in response to the payment execution (S39).

As described above, the use permission process of the payment information is executed.

The above-described means and functions are realized by reading and executing a predetermined program by a computer (including a CPU, an information processing apparatus, and various terminals). The program is recorded in a computer-readable recording medium, for example, a flexible disk, a CD (e.g., a CD-ROM or the like) and a DVD (e.g., a DVD-ROM, a DVD-RAM, or the like). In this case, the program is read from the recording medium by a computer and transmitted to an internal storage unit or an external storage unit to be stored and executed. Further, the program may be pre-stored in a storage unit (recording medium) such as a magnetic disk, an optical disk, or an optical magnetic disk and transmitted from the recording medium to a computer through a communications line.

While this invention has been described in connection with what is presently considered to be practical embodiments, it is to be understood that the invention is not limited to the disclosed embodiments, but, on the contrary, is intended to cover various modifications and equivalent arrangements included within the spirit and scope of the appended claims.

## Claims

1. A payment terminal including a storage unit having a payment information database to which a caller number and payment information are stored in association with each other, and being communicatively connected to a communication terminal having at least one communication function, the payment terminal comprising:
a communication unit configured to connect a call received from the communication terminal;
a caller number acquisition module configured to acquire a caller number of the communication terminal corresponding to the received call; and
a payment information extraction module configured to extract from the payment information database payment information that is stored in association with the acquired call number.

2. The payment terminal of claim 1, further comprising:
a billing information receiving module configured to receive billing information about a payment from the communication terminal; and
a payment execution module configured to pay a bill about the received billing information by using extracted payment information.

3. The payment terminal of claim 2, further comprising
a payment information use permission module configured to transmit the extracted payment information to the communication terminal to allow the communication terminal to execute a payment by using the payment information.

4. The payment terminal of claim 1, further comprising
a payment information use permission module configured to transmit the extracted payment information to the communication terminal to allow the communication terminal to execute the payment by using the payment information.

5. A payment system comprising:
a communication terminal having a communication function; and
a payment terminal including a storage unit having a payment information database to which a caller number and payment information are stored in association with each other, and being communicatively connected to the communication terminal,
wherein the communication terminal comprises:
a calling module configured to place a call to the payment terminal;
a caller number transmission module configured to transmit a caller number of the communication terminal to the payment terminal while placing the call or performing the call; and
a billing information transmission module configured to transmit billing information to the payment terminal, and
wherein the payment terminal comprises:
a communication unit configured to connect the call received from the communication terminal;
a caller number acquisition module configured to acquire a caller number of the communication terminal corresponding to the received call;
a payment information extraction module configured to extract from the payment information database payment information that is stored in association with the acquired call number;
a billing information receiving module configured to receive billing information about a payment from the communication terminal; and
a payment execution module configured to pay a bill about the received billing information by using extracted payment information.

6. A payment system comprising:
a communication terminal having a communication function; and
a payment terminal including a storage unit having a payment information database to which a caller number and payment information are stored in association with each other, and being communicatively connected to the communication terminal,
wherein the communication terminal comprises:
a calling module configured to place a call to the payment terminal;
a caller number transmission module configured to transmit a caller number of the communication terminal to the payment terminal while placing the call or performing the call;
a payment information receiving module configured to receive payment information from the payment terminal; and
a payment execution module configured to execute a payment by using the received payment information,
wherein the payment terminal comprises:
a communication unit configured to connect the call received from the communication terminal;
a caller number acquisition module configured to acquire a caller number of the communication terminal corresponding to the received call;
a payment information extraction module configured to extract from the payment information database payment information that is stored in association with the acquired call number; and
a payment information use permission module configured to transmit the extracted payment information to the communication terminal to allow the communication terminal to execute the payment by using the payment information.

7. A payment method executed by a payment terminal including a storage unit having a payment information database to which a caller number and payment information are stored in association with each other, and being communicatively connected to a communication terminal having at least one communication function, the payment method comprising:
connecting a call received from the communication terminal;
acquiring a caller number of the communication terminal corresponding to the received call; and
extracting from the payment information database payment information that is stored in association with the acquired call number.

8. A program for executing a payment method in a payment terminal including a storage unit having a payment information database to which a caller number and payment information are stored in association with each other, and being communicatively connected to a communication terminal having at least one communication function, the method comprising:
connecting a call received from the communication terminal;
acquiring a caller number of the communication terminal corresponding to the received call; and
extracting from the payment information database payment information that is stored in association with the acquired call number.
